# EUROPEAN PATENT APPLICATION

(11) **EP 2 736 247 A1**
(43) Date of publication of application: **28.05.2014**
(21) Application number: 12007951.2
(22) Date of filing: 26.11.2012
(51) Int. Cl.: H04N 5/222

(54) **A method for obtaining a virtual object within a virtual studio from a real object**

(71) Applicant: Brainstorm Multimedia, S.L., 46005 Valencia (ES)
(72) Inventor: Rodríguez García, Rafael, 46010 Valencia (ES); Montesa Andrés, Ricardo, 46005 Valencia (ES)
(74) Representative: Juncosa Miro, Jaime

(57) **Abstract**

The method comprising capturing by at least a camera an image of the real object against a background; including said captured image of said real object mapped on a three dimensional model obtaining a virtual object consisting of a three dimensional model of said real object; and incorporating said real object as one more virtual object of a virtual set. Embodiments of the method further comprises obtaining information regarding the position of said virtual object by determining the position of the real object based on said captured image.

## Description

### Field of the art

The invention relates to the field of virtual or imaging systems, and in particular, to a method for obtaining a virtual object within a virtual studio from a real object.

### Prior State of the Art

Virtual sets usually operate by merging two images, one captured by a real camera and another synthetic image representing the virtual set. To integrate real objects into a virtual studio it's necessary to adjust the viewpoint of the virtual camera so that it precisely matches the location of the real camera. Camera tracking systems are used to know the exact position of the real camera.

However, there is another simpler method which is slightly less rigorous yet also produces a convincing effect. Instead of merging the real and virtual images, the real image of a person is incorporated as one more virtual element in the virtual scenario. The real and synthetic images do not need to be superimposed, no longer is it necessary to position the virtual camera nor therefore any camera tracking system is needed anymore.

In order to incorporate the captured image of the person within the virtual scenario, its silhouette is obtained from such capture against a blue or green background and then it is mapped on a surface called the billboard. This object is the best possible approach to the person's tree-dimensional model based on this camera shot.

The billboard is very simple; it is completely flat and has no information about its position. It is therefore necessary to position it correctly so as to avoid unwanted artifacts because:
1. It is assumed that the person is upright and so the billboard image is placed vertically.
2. As the billboard of the person's image is flat and of negligible thickness, it must be continuously oriented towards the virtual camera and kept vertical so that the image is correctly visualized from the selected viewpoint.
3. As the billboard has to swivel to camera, an axis must be selected for it to pivot around. The vertical axis which passes through the center of the captured image is considered the most appropriate. The person must therefore not move away from the center of this image, so when the billboard swivels, it will stop the person's silhouette from sliding across the floor of the virtual set.
4. The person's silhouette must not occupy the whole of the captured image; some security margins are needed to ensure that the silhouette is fully captured at all times. Once the security margin below the image has been chosen, the correct position of the billboard can be calculated so that the person's feet are resting on the virtual set's floor. The person must not move towards or away from the real camera to ensure that the above calculation is maintained.
5. Finally, if the aim is to shoot close-ups using a virtual camera, the shot of the person must be of the highest possible resolution so that any lack of resolution will not be seen in the resulting close-up.

The existing image capturing methods for systems without camera tracking are very inexpensive, and easy to use and maintain, but they suffer from a certain problem, not knowing the person's precise location means that the person must remain constantly in position and cannot move around the set:
- The person has to stay in center shot so the feet don't slide across the floor when swiveling the billboard towards the camera.
- The person must stay at the correct distance to the camera so the feet rest correctly on the floor of the virtual set.

These two constraints make program production somewhat static given that the person cannot move freely around the set nor interact easily within it.

There are several companies providing solutions for virtual sets which use cameras without a tracking system, and which use a graphics engine that embeds the captured image as one more image in the virtual set. The main ones are Brainstorm Multimedia®, Monarch®, Hybrid®, NewTec®, RossVideo®, etc. Although, there has been no company to date which goes further, and in any event the obtained results suffer from the previously mentioned artifacts and problems. The present invention is related to this scenario, and it is aimed at removing the mentioned artifacts.

### Summary of the Invention

The object of the present invention is to provide a method for systems without camera tracking in order to remove the aforementioned artifacts and free the person's to move around the virtual set.

This objective is achieved by calculating the person's position based on the captured image. The person's position is calculated by using a single camera but, if needed, the image from any other camera within the virtual studio can also be used to be mapped on the virtual object.

To that end, the present invention provides a method for obtaining a virtual object within a virtual studio from a real object, comprising the following elements:
- capturing by at least one camera, an image of the real object against a background;
- including said captured image of said real object mapped on a three dimensional model, obtaining a virtual object consisting of a three dimensional model of said real object; and
- incorporating said real object as one more virtual object of a virtual set.

On contrary of the known proposals, and in a characteristic manner, the method further comprises obtaining information regarding the position of said virtual object by determining the position of the real object based on said captured image.

The position of the virtual object is determined by calculating at least the coordinates of the lowest point of said captured image of the real object against the background, said background being a colour flat surface.

Then, a plurality of movements of said real object to the virtual object are transferred at each moment in real time and a beam direction from said lowest point of the real object in the captured image to the nodal point of at least said camera is calculated.

The method further determines the intersection of the beam direction from at least said camera nodal point with the floor and calculates from said intersection the position of the real object providing a horizontal plane position of the virtual object.

Moreover, the method of the present invention selects the axis which passes through the center of said real object in the captured image for rotating said virtual object and when the real object moves it comprises recalculating said virtual object height in order to avoid any vertical displacement.

In a preferred embodiment, the virtual object height is recalculated by displacing the virtual object an amount related to the distance between the bottom of the real object in the image and the bottom of the image, by matching the bottom of the real object in the mapped image on the virtual object with the horizontal plane.

In another embodiment, for capturing the real object image, at least a second camera is used, said at least second camera mapping said real object image on said virtual object.

The virtual object can be positioned at any location within said virtual set, and the real object can freely move towards or away from at least said camera.

Finally, in yet another embodiment, the virtual object mapping the captured image of the real object can be provided with volume and/or extrusion, based on a blurred mask of the real object against said background, i.e. it does not have to be a flat surface. In a first step the person's silhouette in white over a black background, is blurred, the resulting image's gray levels are then converted then into extrusion displacements, and finally, based on this data, the three dimensional model is created.

### Brief Description of the Drawings

The previous and other advantages and features will be more fully understood from the following detailed description of embodiments, with reference to the attached, which must be considered in an illustrative and non-limiting manner, in which:

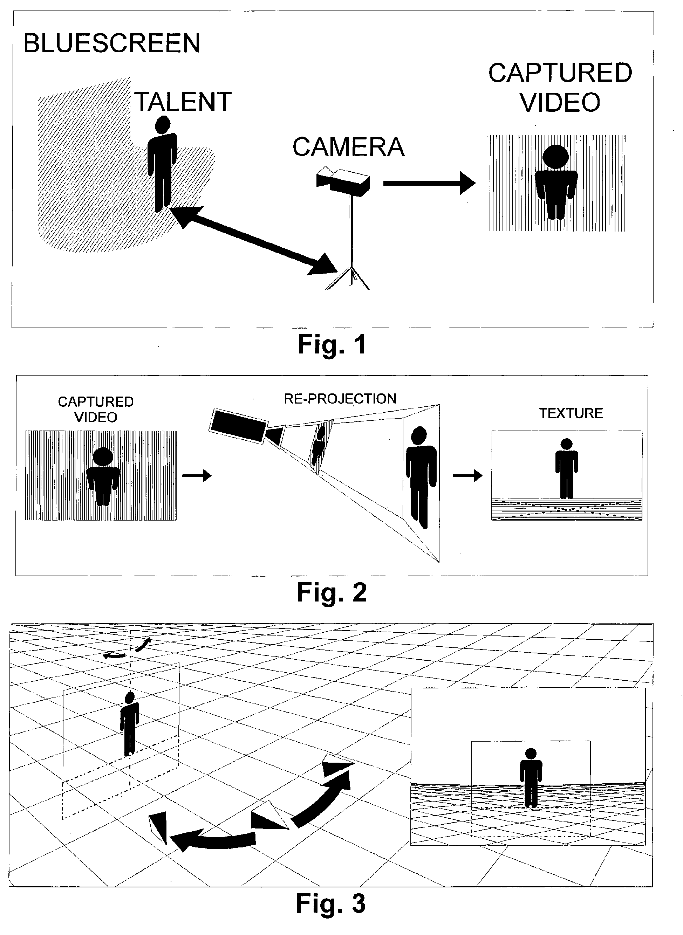

Fig. 1 is an illustration representing a monitoring system without camera tracking.
Fig. 2 is an illustration of a re-projection of a texture to eliminate the effects of conic projection in the camera shot.
Fig. 3 is an illustration representing the orientation of the billboard to the camera.

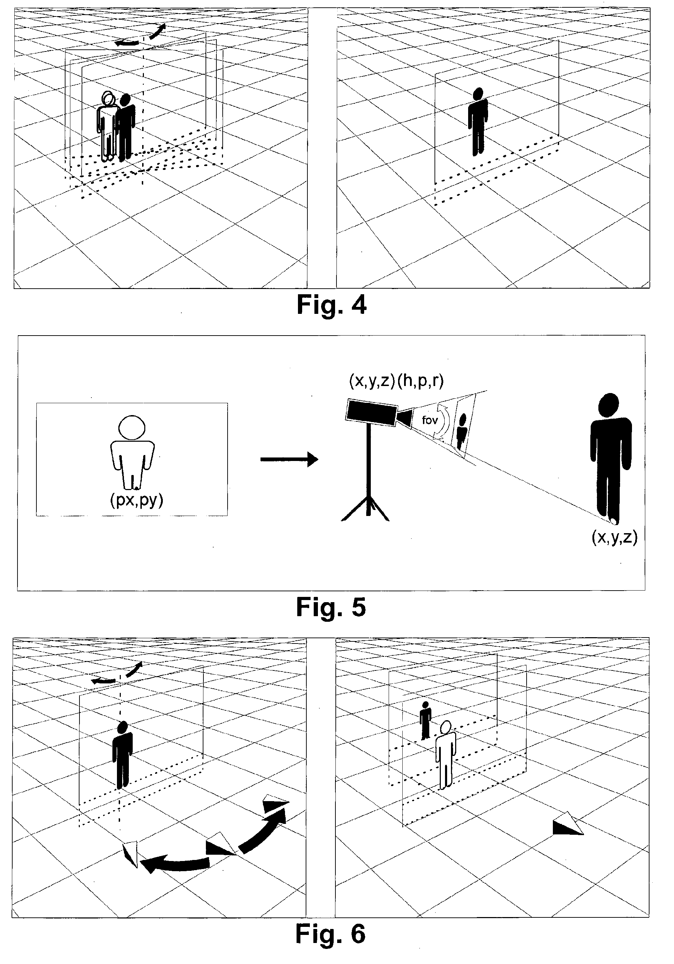

Fig. 4 is an illustration showing the artifacts produced when the person is not correctly placed within the virtual set.
Fig.5 is an illustration showing the calculation of the person's position from the captured image, according to an embodiment of the present invention.
Fig. 6 is an illustration showing how to relocate the billboard and its axis in order to solve the artifact issue, according to an embodiment of the present invention.

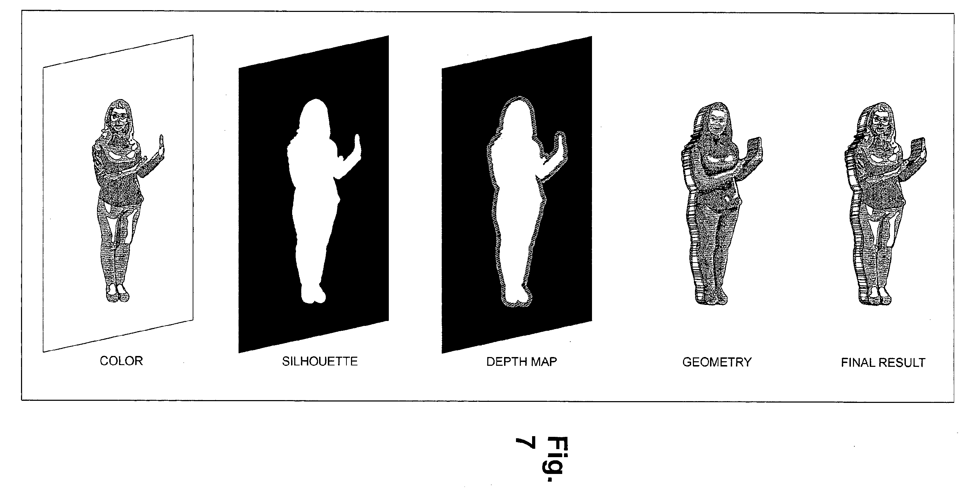

Fig. 7 is an illustration showing the process of providing volume to the person's silhouette.

### Detailed Description of Several Embodiments

Being the aim of the invention to remove the sliding and lifting artifacts, it is necessary to obtain the person's position in order to place the three-dimensional model accordingly.

For tracking the person's position, the method proposed in the present invention has the advantage of not requiring any additional equipment given that it can use the image from the same camera that captures the person, or it can also be obtained by any other camera which is in the virtual studio or set.

The intention is to reduce the complexity of tracking the person's feet, and the fact that these must always be seen touching the floor actually simplifies the problem enormously. The person silhouette algorithm calculates its lowest point in the image against the background colour flat surface, which is assumed to be the point which corresponds to the person's feet.

Therefore, if a flat or extruded silhouette is taken as the best approximation for the person's three dimensional form, the proposed method then adds the information about its position and so enables the location and alignment within the virtual set.

From the position of the person's feet in the captured image and the optical configuration of the relevant camera it is then possible to calculate the direction the beam travels from their feet to the nodal point of the camera sensor.

Once this angle is known, along with the camera position and orientation, it's possible to determine the final beam angle which intersects with the floor and gives the tridimensional position of the person's feet.

Once the person's position is known, the location of the billboard and axis can be determined in real-time, which enables them to be correctly positioned on their precisely- calculated spot.

To avoid any lateral displacement of the person, the system automatically moves the billboard and axis so that there is no possibility of the person's silhouette sliding across the virtual floor. The movement to rotate the billboard to face the camera always comes from the axis which passes through the center of the person's silhouette.

To avoid any longitudinal displacement of the person when they move towards or away from the camera, the system recalculates the position of the billboard and mirrors this exact movement, so ensuring that the person's feet are always touching the virtual floor.

The method proposed in the present invention removes the need of using any of the additional systems commonly seen in traditional virtual sets; it also removes the need for maintenance or lens calibration. The only equipment needed for the system is a cyclorama, a camera and a workstation. This therefore lowers the equipment costs to that of systems which do not use actual cameras.

In addition, the proposed invention is able to produce viewpoints and angles which are impossible with conventional systems.

If only one single camera is involved; it films and tracks the person. This is why the person's whole image is needed. However the option of adding an auxiliary camera for tracking shots is also possible, which increases the main camera's flexibility, allowing it to change angle or do close-ups.

The foregoing describes embodiments of the present invention and modifications, obvious to those skilled in the art can be made thereto, without departing from the scope of the present invention.

## Claims

1. A method for obtaining a virtual object within a virtual studio from a real object, comprising:
- capturing by at least one camera an image of the real object against a background;
- including said captured image of said real object mapped on a three dimensional model, obtaining a virtual object consisting of a three dimensional model of said real object; and
- incorporating said real object as one more virtual object of a virtual set, **characterized in that** the method further comprises obtaining information regarding the position of said virtual object by determining the position of the real object based on said captured image.

2. A method according to claim 1, wherein said position is determined by calculating at least the coordinates of the lowest point of said captured image of said real object against said background.

3. A method according to claim 1 or 2, wherein said background is a colour flat surface.

4. A method according to claim 1, wherein it comprises transferring a plurality of movements of said real object to said virtual object.

5. A method according to claim 4, wherein said plurality of movements of said real object transferred to said virtual object are transferred at each moment in real time.

6. A method according to claim 2, wherein it comprises further calculating a beam direction from said lowest point of the real object in said captured image to the nodal point of at least said one camera.

7. A method according to claim 6, wherein it further comprises determining the intersection of said beam direction from at least said one camera nodal point with the floor and calculating from said intersection the position of said real object providing an horizontal plane position of the virtual object.

8. A method according to claims 4 or 5, wherein it comprises selecting the axis which passes through the center of said real object in the captured image for rotating said virtual object.

9. A method according to claim 4, wherein when said real object moves it comprises recalculating said virtual object height in order to avoid any vertical displacement.

10. A method according to claim 9, wherein said recalculating is performed by displacing the virtual object an amount related to the distance between the bottom of the real object in the image and the bottom of the image, by matching the bottom of the real object in the mapped image on the virtual object with the horizontal plane.

11. A method according to claim 1, wherein it comprises capturing said real object image by at least a second camera, said at least second camera mapping said real object image on said virtual object.

12. A method according to any of previous claims, wherein it comprises positioning said virtual object at any location within said virtual set.

13. A method according to claim 1, wherein it comprises moving said real object towards or away from at least said one camera .

14. A method according to claim 1, wherein it comprises providing volume and/or extrusion to said virtual object obtained from said captured image of said real object mapped on a three dimensional model.

15. A method according to claim 14, wherein said volume and/or extrusion of said virtual object is based on a blurred image of said real object against said background.
